# EUROPÄISCHE PATENTANMELDUNG

(11) **EP 3 549 961 A1**
(43) Veröffentlichungstag der Anmeldung: **09.10.2019**
(21) Anmeldenummer: 18165407.0
(22) Anmeldetag: 03.04.2018
(51) Int. Cl.: C08F 220/06, C04B 24/26

(54) **BETON-FLIESSVERBESSERER UND WASSERREDUKTIONSMITTEL**

(71) Anmelder: Evonik Röhm GmbH, 64293 Darmstadt (DE)
(72) Erfinder: Krill, Steffen, 64367 Mühltal (DE); Vorholz, Johannes, 63755 Alzenau (DE); Weber, Andreas, 60596 Frankfurt (DE); Kaufmann, Marita, 64347 Griesheim (DE); Wittkowski, Andrea, 64823 Gross-Umstadt (DE)
(74) Vertreter: Evonik Patent Association

(57) **Zusammenfassung**

Die vorliegende Erfindung betrifft ein Verfahren zur Herstellung einer Poly(meth)acrylsäure, dadurch gekennzeichnet, dass ein (Meth)acrylsäure enthaltender Prozessstrom aus der (Meth)acrolein-Synthese der radikalischen Polymerisation unterworfen wird.

Die Erfindung betrifft außerdem die Veresterung des erhaltenen Polymers zu einem Homo- oder Copolymerester sowie dessen Verwendung als Additiv, Fließverbesserer und Wasserreduktionsmittel.

## Beschreibung

Bei der Herstellung von Methylmethacrylat durch C₄-basierte Oxidation von Methacrolein (Arntz, W. et al., "Acroleine and Methacroleine" in Ullmann's Encyclopedia of Industrial Chemistry, Elektronische Ausgabe, 329 (2012), Bauer, W. "Methacrylic Acid and Derivatives in Ullmann's Encyclopedia of Industrial Chemistry, Elektronische Ausgabe,1, (2012)) fallen Prozessströme an, die Methacrylsäure und Methacrolein und daneben übliche Nebenkomponenten der spezifischen Synthesen, nämlich Formalinreste, Ameisensäure, Essigsäure, Terepthalsäure etc. enthalten. Diese Stoffströme werden im Rahmen der Monomerisolierung entsprechend aufgearbeitet.

Bei der Herstellung von Acrolein ausgehend von Propan oder Propylen (Weigert, M., "Acrolein" in Ullmanns Encyklopädie der technischen Chemie, 4. Auflage, Bd. 7, 77 (1974), Arntz, W. et al., "Acroleine and Methacroleine" in Ullmann's Encyclopedia of Industrial Chemistry, Elektronische Ausgabe, 329 (2012)) fällt ein Rohstrom an, der das Nebenprodukt der Partialoxidation von Propylen, die Acrylsäure in signifikanten Anteilen neben weiteren Nebenkomponenten, wie Formalinreste, Ameisensäure, Essigsäure etc. enthält. Dieser wird üblicherweise entsorgt.

Im Folgenden steht der Begriff "(Meth)acrylsäure" in diesem Zusammenhang sowohl für Methacrylsäure als auch für Acrylsäure und/oder deren Mischungen. Der Begriff "(Meth)acrolein" bedeutet in diesem Zusammenhang sowohl Methacrolein als auch Acrolein und/oder deren Mischungen. Der Begriff Poly(meth)acrylsäure steht analog für Polymethacrylsäure, Polyacrylsäure oder Copolymere, welche sowohl Acrylsäure-Einheiten als auch Methacrylsäure-Einheiten enthalten

Die (Meth)acrylsäure enthaltenden Prozessströme sind alternativ zur Herstellung von Polymeren im Sinne des erfindungsgemäßen Verfahrens geeignet, welches im Folgenden beschrieben wird:
Die vorliegende Erfindung betrifft ein Verfahren zur Herstellung einer Poly(meth)acrylsäure, dadurch gekennzeichnet, dass ein (Meth)acrylsäure enthaltender Prozessstrom aus der (Meth)acrolein-Synthese der radikalischen Polymerisation unterworfen wird. Sie betrifft außerdem die Veresterung des erhaltenen Polymers zu einem Copolymerester sowie dessen Verwendung als Fließverbesserer.

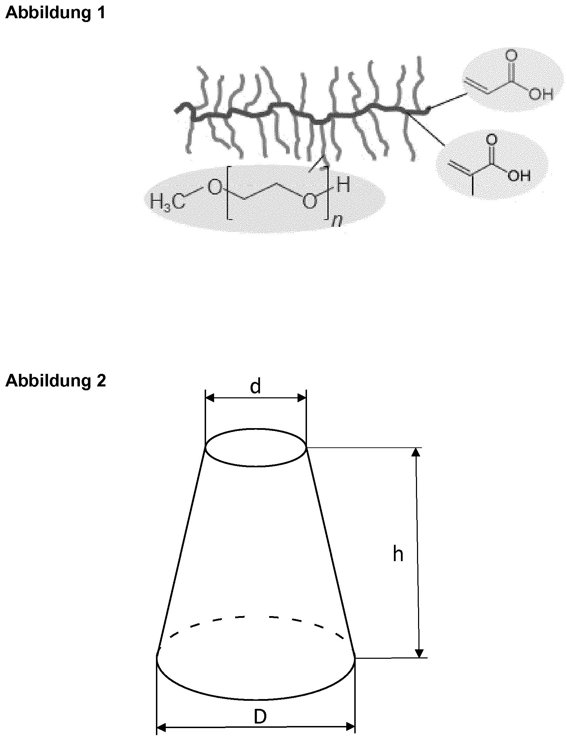

Beton-Fließverbesserer werden zur Verbesserung des Fließverhaltens und der Verarbeitungsdauer sowie der Eigenschaften von Beton eingesetzt. Polycarboxylatether (PCE), sogenannte "Superplasticizer" (SP), stellen hier eine besonders wichtige und leistungsfähige Polymerklasse dar (Flatt, R., Schober I., "Superplasticizers and the Rheology of Concrete", in "Understanding the Rheology of Concrete", Woodhead Publishing Ltd, 2012, 144). Bei PCE handelt es sich um Kammpolymere mit anionischem Hauptstrang ("Backbone") und flexiblen, nicht-ionischen Seitenketten. Die Dispergierwirkung dieser Polymere in zementösen Systemen während der Verarbeitung wird durch Adsorption des Backbones an die Zementteilchen und zusätzlich durch die durch die Seitenketten induzierte sterische Abstoßung erzielt. Bei den für den anionischen Hauptstrang verwendeten Monomeren handelt es sich überwiegend um Methacrylsäure (MAS), Acrylsäure (AS), Maleinsäure (MAL) oder Maleinsäureanhydrid (MSA), bei den Seitenketten mehrheitlich um Methoxypolyethylenglykol (MPEG) und Polyethylenglykol (PEG). Ein einfacher PCE aus den Monomereinheiten (Meth)acrylsäure und mit Seitenketten mit Methoxypolyethylenglykol-Funktionalität, ist in der Abbildung 1 dargestellt.

Somit handelt es sich bei den im Stand der Technik vorbeschriebenen SP chemisch gesehen um Polymere, die als Backbone C-C verknüpfte Monomere und als funktionelle Seitengruppen Brönstedtsaure Carboxylatgruppen, teilweise frei oder neutralisiert, enthalten, sowie organische Ester- und Etherfunktionen.

PCE werden hauptsächlich über zwei Synthesewege, zum einen durch polymeranaloge Verfahren (z.B. polymeranaloge Veresterung und/oder polymeranaloge Amidierung) oder zum anderen durch Co-Polymerisation hergestellt (Flatt, R., Schober I., "Superplasticizers and the Rheology of Concrete", in "Understanding the Rheology of Concrete", Woodhead Publishing Ltd, 2012, 144; Ferrari, G. et al., "Influence of Carboxylic Acid-Carboxylic Ester Ratio of Carboxylic Acid Ester Superplasticizer on Characteristics of Cement Mixtures", International Concrete Abstracts, 195, 2000, 505; Lange, A., Plank, J., "Optimization of comb-shaped Polycarboxylate Cement Dispersants to achieve fast-flowing Mortar and Concrete", J. Appl. Polym. Sci., 2015, 42529; Albrecht, G. et al., "Co-Polymere auf der Basis von Maleinsäurederivaten und Vinylmonomeren, deren Herstellung und Verwendung", EP 0 610 699, 1994; Arfaei, A. et al., "Improved cement admixture product having improved rheological properties and process of forming same", EP 0 739 320, 1999; Shawl, E., "Cement additives", EP 0 889 860, 2000; Kroner, M. et al., "Verfahren zur Modifizierung von Säuregruppen enthaltenden Polymerisaten", DE10015135, 2001; Sulser, U. et al., "Amid- und Estergruppen aufweisendes Polymer, dessen Herstellung und Verwendung", EP 1 577 327, 2005; Sulser, U. et al., "Kammpolymere mit verzögerter alkalischer Hydrolyse", EP 2 567 988, 2011; Akira, I. et al., "Admixture for hydraulic composition", JP 2013-082560, 2013; Cerulli, T., et al., "Zero slump-loss superplasticizer", US 5362324, 1994; Yamato, F. et al., "Admixture for Concrete", WO 95/16643, 1994; Amaya, T. et al., "Cement dispersant and concrete composition containing the dispersant", EP 1 184 353, 1999; Lepori, A. et al., "Acrylic Co-Polymers", US 6043329, 2000; Dreher S. et al., "Zementzusammensetzungen, enthaltend redispergierbare Polymerisatpulver", DE 19 942 301, 2001; Kroner, M. et al., "Verwendung wasserlöslicher Polymerisate von Estern aus Acrylsäure, Methacrylsäure und Alkylpolyalkylenglycolen als Zusatz zu zementösen Systemen", EP 1 260 536, 2002; Maeder, U. et al., "Polymers in a solid state", CA 2480061, 2003; Hirata, T., Kawakami, H., "Method for production of cement dispersant and polycarboxylic acid type polymer for cement dispersant", WO 2006/006712, 2006; Koshisaka, S. et al., "Cement dispersant and concrete composition containing the dispersant", AU 2004318289, 2006; Bando, H. et al., "Cement dispersant and concrete composition containing the dispersant", US 7393886, 2008; Sugamata, T. et al., "Cement additives", WO 2009/050104, 2009; Wang, Z. et al., "Verfahren zur Verwendung von bei der Produktion von Acrylaldehyd angefallener Flüssigkeit zur Herstellung von Polycarboxylat-Wasserreduzierungsmittel", CN 10 222 9691, 2011; Wang Z. et al., "Method for preparing polycarboxylic slump-retaining agent from raffinate after acrolein production", CN 102558454, 2011; Sulser, U. et al., "Dispergiermittel für Feststoffsuspensionen", EP 2 578 608, 2011; Kuo, L. et al., "Method for treating clay and clay-bearing aggregates and compositions thereof", WO 2013/164471, 2013).

Bei polymeranalogen Verfahren (z.B. polymeranaloger Veresterung und/oder polymeranaloger Amidierung) wird im ersten Schritt der Backbone durch radikalische Polymerisation - teilweise auch in wässrigen Milieu - z.B. aus MAS und/oder AS hergestellt. Im zweiten Schritt erfolgt die Veresterung der Säuregruppen des Backbones mit einem langkettigen Alkohol, z.B. Methoxypolyethylenglykol (MPEG, auch MPEG-OH). Analog ist die Amidierung mit entsprechenden Aminen, z.B. MPEG-NH₂, möglich.

Alternativ können die Kammpolymere grundsätzlich direkt über die Co-Polymerisation von z.B. MAS und AS mit z.B. (M)PEG-(Meth)acrylat ((M)PEG-(M)A) erhalten werden. Auch werden ungesättigte Polyether, wie z.B. Allylpolyethylenglykol (APEG), Methylallylpolyethylenglykol (TPEG), Isoprenpolyethylenglykol (HPEG) oder Vinyloxybutylpolyethylenglykol (VOBPEG) als Co-Monomere eingesetzt. In der wissenschaftlichen Literatur sind darüber hinaus weitere Einsatzstoffe (u.a. Styrol, funktionelle (Meth)acrylate, funktionelle Amine oder weitere Carbonsäuren und
deren Salze) beschrieben.

In Abhängigkeit von Einsatzstoffen und Syntheseroute werden Polymere mit unterschiedlichen Leistungscharakteristiken erhalten. Wichtige Einflussfaktoren sind hierbei generell die Chemie der Gruppen des Backbones (z.B. Acryl-, Methacryl-, Vinyl-, Allyl-Gruppen, Maleinsäure), die Flexibilität des Backbones (ebenfalls einstellbar über die zuvor genannten Gruppen), die Anzahldichte hydrophober Gruppen (z.B. -CH₂-, -CH₃) und hydrophiler Gruppen (z.B. -CH₂-CH₂-O-, -OH), die Anzahldichte ionischer Gruppen (z.B. Carbonsäuregruppen und deren Salze), die Zusammensetzung der Seitenketten (mehrheitlich (M)PEG, aber auch Polypropylenoxid (P(PO)) und Polybutylenoxid (P(BuO)), die Länge von Backbone und Seitenketten (typische Molekulargewichte reichen von ∼ 4000 bis 7000 g/mol für das Backbone und von ∼ 500 bis 10000 g/mol, mehrheitlich 750 bis 5000 g/mol, für die Seitenketten), die Seitenkettenhäufigkeit, die Ladungsdichte des Polymers oder die Natur und die Stabilität der Bindungen zwischen Seitenkette und Backbone (Ester, Amid oder Ether). Auch innerhalb der Ester-Bindungen gibt es Unterschiede in der Stabilität. PCE mit einer hohen Anzahl ionischer Gruppen adsorbieren stärker an die Zementteilchen und zeigen eine anfänglich stärkere fließverbessernde Wirkung als PCE mit einer hohen Anzahl an Acrylester- bzw. Methacrylester-Einheiten (Flatt, R., Schober I., "Superplasticizers and the Rheology of Concrete", in "Understanding the Rheology of Concrete", Woodhead Publishing Ltd, 2012, 144; Ferrari, G. et al., "Influence of Carboxylic Acid-Carboxylic Ester Ratio of Carboxylic Acid Ester Superplasticizer on Characteristics of Cement Mixtures", International Concrete Abstracts, 195, 2000, 505; Lange, A., Plank, J., "Optimization of comb-shaped Polycarboxylate Cement Dispersants to achieve fast-flowing Mortar and Concrete", J. Appl. Polym. Sci., 2015, 42529).

Die wässrige Lösung eines zementösen Systems (sog. "Porenlösung") weist einen hohen pH-Wert, z.B. in der Größenordnung von 12.5 bis 13 (Flatt, R., Schober I., "Superplasticizers and the Rheology of Concrete", in "Understanding the Rheology of Concrete", Woodhead Publishing Ltd, 2012, 144) und höher (Plank, J. et al., Experimental determination of the thermodynamic parameters affecting the adsorption behaviour and dispersion effectiveness of PCE superplasticizers, Cement and Concrete Res., 40, 2010, 699 bis 709) auf. Bei diesen Bedingungen hydrolysieren die Ester-Bindungen der Acrylester-Gruppen, so dass PEG bzw. allgemein die Seitenkette abgespalten wird und als Folge wieder eine ionische Carboxyl-Gruppe resultiert. Dadurch erhöht sich die lonenstärke des PCE mit der Zeit, so dass eine längere, fließverbessernde Wirkung des Polymeren beobachtet wird (Flatt, R., Schober I., "Superplasticizers and the Rheology of Concrete", in "Understanding the Rheology of Concrete", Woodhead Publishing Ltd, 2012, 144). Die Ester-Bindungen der Methacrylester-Einheiten sind bezüglich der Hydrolyse stabiler als die Ester-Bindungen der Acrylester-Einheiten, Amid-Bindungen sind im Allgemeinen besonders hydrolysestabil. Hiermit kann die Dauer der Fließverbesserung beeinflusst werden. Die Viskosität eines mit PCE verflüssigten Betonsystems und dessen Fließgeschwindigkeit werden durch das Verhältnis von hydrophilen zu lipophilen Gruppen (HLB-Wert) bestimmt. Je höher der Anteil an hydrophilen Gruppen, desto niedriger die Viskosität der Zement-Suspension.

Eine mögliche Quelle für die bei der Herstellung von PCE benötigte (Meth)acrylsäure ist die großchemische (Meth)acrolein-Synthese. Bei Acrolein (Acrylaldehyd) bzw. Methacrolein (Methacrylaldehyd) handelt es sich um die einfachsten ungesättigten Aldehyde, die bedeutende Zwischenprodukte in der chemischen Industrie darstellen. Beispielsweise findet (Meth)acrolein als Zwischenprodukt Verwendung für die synthetische Herstellung von Methionin, Polymeren, Harzen, Arzneimitteln, Pflanzenschutzmitteln und Aromastoffen. Bei der Herstellung von (Meth)acrolein fällt eine wässrige Lösung von (Meth)acrylsäure an. Gegenwärtig wird diese Lösung im Falle des Acrolein-Prozesses regelmäßig durch Verbrennen entsorgt, im Falle von Methacrolein weiter aufgearbeitet.

Es besteht auch die Möglichkeit, aus der im Abwasser des (Meth)acrolein-Prozesses verdünnt vorliegenden (Meth)acrylsäure ein Acrylat zu synthetisieren und abzutrennen. Beschrieben ist beispielsweise die Gewinnung von Natriumacrylat durch Zugabe von Natronlauge mit anschließender Abtrennung des Natriumacrylats (Sun, W. et al., "Treatment method of acrolein production residual liquid", CN 103435470, 2013).

Auch möglich ist die Oxidation des Rest(meth)acroleins zur (Meth)acrylsäure. Bei einer Verwendung der bei der Produktion von (Meth)acrylaldehyd anfallenden Flüssigkeit zur Herstellung von PCE können im Falle des Acrolein-Prozesses die für die Entsorgung durch Verbrennen entstehenden Kosten eingespart werden. Im Falle von Methacrolein kann eine alternative Verwendung des noch nicht aufgearbeiteten Prozessstroms erfolgen. Darüber hinaus könnte auch eine effektive Senkung der Herstellungskosten für Beton-Fließverbesserer auf PCE-Basis erreicht werden.

CN 102229691 beschreibt die Co-Polymerisation von in Abwasser des Acrolein-Prozesses enthaltener, niedrig konzentrierter AS mit ungesättigten Polyethern (APEG, TPEG, HPEG) zu einem PCE im Zulaufverfahren unter dem Einsatz von Oxidations- und Reduktionsmitteln. Die Acrylsäure-Konzentration liegt bei 4 % bis 7 %, bezüglich weiterer Nebenkomponenten ist das beschriebene Abwasser nicht weiter spezifiziert.

CN 102558454 beschreibt analog die Co-Polymerisation von in Abwasser des Acrolein-Prozesses enthaltener, niedrig konzentrierter AS mit ungesättigten Polyethern (APEG, TPEG, HPEG sowie Isoprenyl-PEG) und zusätzlich Hydroxyethyl- und Hydroxylpropyl-(Meth)acrylat sowie (Meth)acrylamid zu einem PCE im Zulaufverfahren unter dem Einsatz von Oxidations- und Reduktionsmitteln. Die Acrylsäure-Konzentration liegt bei 4,5 % bis 7 %, die Acroleinkonzentration bei 5,5 bis 6,5%, bezüglich weiterer Nebenkomponenten ist das beschriebene Abwasser nicht spezifiziert.

Nachteilig an den in CN 102229691 und CN 102558454 beschriebenen Verfahren sind die hohe Verdünnung der Acrylsäure sowie die Gegenwart von Stabilisatoren, Inhibitoren und weiteren Komponenten, die die radikalische Polymerisation behindern. Dies führt dazu, dass Reaktionszeiten (im Vergleich zu der Verwendung reiner Komponenten) relativ lang sind und relativ hohe Konzentrationen an Radikalstartern eingesetzt werden müssen. Da nach der Lehre der CN 102229691 und CN 102558454 die komplette Polymersynthese in der stark verdünnten Lösung stattfindet, ist außerdem die volumenbezogene Polymerausbeute relativ gering, so dass nach Abschluss der Polymerisation noch eine Aufkonzentrierung z.B. durch Abdestillation signifikanter Mengen von Wasser erfolgen muss, wenn höhere Wertstoffkonzentrationen benötigt werden. Gemäß CN 102229691 und CN 102558454 wird ein PCE erzeugt, bestehend aus einem C-C-verknüpften Backbone mit funktionalen Gruppen aus Carboxylatfunktionen (frei oder neutralisiert), im Falle von CN 102558454 Esterfunktionen der (Meth)acrylate und Seitenketten, die über eine Etherbindung mit dem Backbone verknüpft sind. Dieses Funktionalitätsmuster, insbesondere die Etherbindung der Seitenkette, hat ein im Vergleich zu einer analogen Esterbindung in einer Seitenkette grundsätzlich unterschiedliches Hydrolyseverhalten im Beton und führt zu grundsätzlich unterschiedlichem Verhalten bezüglich Frühfestigkeit und der Zeitabhängigkeit der Fließverbesserung (vgl. auch: Flatt, R., Schober I., "Superplasticizers and the Rheology of Concrete", in "Understanding the Rheology of Concrete", Woodhead Publishing Ltd, 2012, 144); lediglich das Wasserreduktionsverhalten im Zement ist ähnlich. In CN 102229691 und CN 102558454 ist die Verwendung eines ungesättigten Polyethers zwingend vorgeschrieben, da nur dieser mit der inhibierten, stark verdünnten Acrylsäure in ausreichender Geschwindigkeit wirtschaftlich umgesetzt werden kann (siehe CN 102229691 und CN 102558454, Ansprüche 1). Damit sind Anwendungen, bei denen Esterbindungen der Seitenketten akzeptiert oder sogar vorteilhaft sind (siehe auch oben) nicht zugänglich. Außerdem schreiben CN 102229691 und CN 102558454 zwingend die Verwendung von Perhydrol, ein eng definiertes Temperaturprogramm (Temperaturprofil), eine eng definierte Dosierungsstrategie sowie die Zugabe von Reduktions- und Kettenübertragungsmitteln vor. Aufgrund dieser Einschränkungen und Randbedingungen ist das beschriebene Verfahren insgesamt sehr komplex und wenig effizient.

Aufgabe der vorliegenden Erfindung war es daher, einen Prozessstrom aus der (Meth)acrolein-Synthese, der bisher aufwendig entsorgt oder aufwendig aufgearbeitet werden musste, als Edukt für die Herstellung von Qualitätsprodukten für die Bauchemie einzusetzen. Dabei wird insbesondere das durch die Oxidationsreaktion bei der Herstellung von (Meth)acrolein entstandene Wasser zunächst nicht abgetrennt, sondern dient inklusive des hier enthaltenen Komponentenspektrums als wässriges Reaktionsmedium für die Polymersynthese.

Weitere Aufgabe der vorliegenden Erfindung war es, ein nachhaltiges und gleichzeitig von der Reaktionsführung her robustes Verfahren zu entwickeln, da die Polymerisation des Backbones bei der Verwendung suboptimaler Eduktmischungen deutlich langsamer und unvollständiger abläuft als beim Einsatz reiner Komponenten unter gleichen Bedingungen. Das betrifft auch die Produktqualität, da vorhandene, typische Nebenkomponenten, wie z.B. Aldehyde, mercaptanbasierte Standardregler desaktivieren, so dass typische Molekulargewichte zunächst nicht zugänglich sind (siehe oben). Weitere hinderliche Nebenkomponenten sind Substanzen mit stabilisierender Wirkung, wie z.B. Protoanemonin oder dessen Strukturisomere.

Aufgabe der vorliegenden Erfindung war es ebenfalls, ein Wertprodukt mit guter Performance als Fließverbesserer herzustellen, einen Prozess mit auf das Reaktionsvolumen bezogener hoher Polymerausbeute (Wirtschaftlichkeit) zu entwickeln und eine gut handhabbare Formulierung mit gleichzeitig hohem Wirkstoffgehalt zur Verfügung zu stellen.

Diese Aufgaben werden erfindungsgemäß gelöst durch ein Verfahren zur Herstellung einer Poly(meth)acrylsäure, dadurch gekennzeichnet, dass ein (Meth)acrylsäure enthaltender Prozessstrom aus der (Meth)acrolein-Synthese der radikalischen Polymerisation unterworfen wird.

Insbesondere wird die Aufgabe gelöst durch ein Verfahren zur Herstellung einer Poly(meth)acrylsäure, dadurch gekennzeichnet, dass ein Prozessstrom aus der (Meth)acrolein-Synthese, der zwischen 8 und 50 Gew.-% (Meth)acrylsäure enthält, bezogen auf das Gewicht des Prozessstroms, in Anwesenheit von Wasser, das bei der Oxidationsreaktion der (Meth)acrolein-Synthese entstanden ist, einer radikalischen Polymerisation unterworfen wird.

Der Begriff "*(Meth)acrylsäure"* bedeutet in diesem Zusammenhang sowohl Methacrylsäure als auch Acrylsäure und/oder deren Mischungen. Der Begriff *"(Meth)acrolein"* bedeutet in diesem Zusammenhang sowohl Methacrolein als auch Acrolein und/oder deren Mischungen.

*"Polymerisation"* bedeutet erfindungsgemäß sowohl Homo- als auch Copolymerisation.

Bei der erfindungsgemäß hergestellten Poly(meth)acrylsäure kann es sich um Polymethacrylsäure, Polyacrylsäure oder Copolymere handeln, welche sowohl Acrylsäure-Einheiten als auch Methacrylsäure-Einheiten enthalten.
Unter dem Begriff *"Polymethacrylsäure"* wird erfindungsgemäß ein Polymer verstanden, das normalerweise mindestens 50 Gew.-%, vorzugsweise mindestens 60 Gew.-%, besonders bevorzugt mindestens 70 Gew.-%, bevorzugt mindestens 80 Gew.-%, ganz besonders bevorzugt mindestens 90 Gew.-% Methacrylsäure-Einheiten, bezogen auf das Gewicht des Polymers, umfasst. Unter dem Begriff *"Polyacrylsäure"* wird erfindungsgemäß ein Polymer verstanden, das typischerweise mindestens 50 Gew.-%, vorzugsweise mindestens 60 Gew.-%, besonders bevorzugt mindestens 70 Gew.-%, bevorzugt mindestens 80 Gew.-%, ganz besonders bevorzugt mindestens 90 Gew.-% Acrylsäure-Einheiten, bezogen auf das Gewicht des Polymers, umfasst. Bei erfindungsgemäß hergestellten Copolymeren, welche sowohl Acrylsäure-Einheiten wie auch Methacrylsäure-Einheiten enthalten, beträgt die Gesamtmenge von (Meth)acrylsäure-Einheiten in der Regel mindestens 70 Gew.-%, bevorzugt mindestens 80 Gew.-%, ganz besonders bevorzugt mindestens 90 Gew.-% (Meth)acrylsäure-Einheiten, bezogen auf das Gewicht des Polymers.

Nach der Polymerisation kann die resultierende Poly(meth)acrylsäure, die mindestens teilweise in Wasser gelöst ist, das zumindest teilweise bei der Oxidationsreaktion der (Meth)acrolein-Synthese entstanden ist, einer weiteren Verarbeitung und/oder Funktionalisierung unterzogen werden, bei der eine funktionalisierte Poly(meth)acrylsäure gebildet wird.

Unter einer *"weiteren Verarbeitung"* wird vorliegend ein Verfahren verstanden, bei dem die Poly(meth)acrylsäure von dem resultierenden Gemisch zumindest teilweise abgetrennt oder isoliert wird. Des Weiteren umfasst der Begriff *"weitere Verarbeitung"* eine Verdünnung des Gemisches oder seine Verwendung für eine Formulierung. Des Weiteren umfasst der Begriff *"weitere Verarbeitung"* eine physikalische und/oder chemische Modifikation des Polymeren und/oder der Lösung, die das Polymer enthält.

Der Begriff *"Funktionalisierung"* der Poly(meth)acrylsäure wird für einen Verfahrensschritt verwendet, bei dem Carboxylgruppen der Poly(meth)acrylsäure zumindest teilweise zu Ester-Gruppen oder AmidGruppen chemisch umgesetzt werden. Nachfolgend wird die resultierende polymere Verbindung als *"funktionalisierte Poly(meth)acrylsäure"* bezeichnet. In einer bevorzugten Ausführungsform werden Carboxylgruppen der Poly(meth)acrylsäure zumindest teilweise zu Ester-Gruppen umgesetzt. Wie bereits vorstehend ausgeführt, kann es sich bei der Funktionalisierung der Poly(meth)acrylsäure um eine Veresterung mit oligomeren, z.B. ethoxylierten und/oder propoxylierten Alkoholen handeln (polymeranaloge Veresterung). Derartige Alkohole haben typischerweise ein Molekulargewicht Mw zwischen 500 g/mol und 15 000 g/mol, vorzugsweise 750 g/mol und 13 000 g/mol.

Wie im Stand der Technik hinreichend bekannt, enthält der Prozessstrom aus der (Meth)acrolein-Synthese neben der (Meth)acrylsäure und Wasser in der Regel weitere Komponenten, welche nachfolgend als *"Nebenkomponenten"* bezeichnet werden. Bei Nebenkomponenten in dem Prozessstrom kann es sich beispielsweise um folgende Verbindungen handeln:
Formaldehyd, Essigsäure, Maleinsäure, Maleinsäureanhydrid, Terephthalsäure, Ameisensäure, Benzoesäure, (Meth)acrolein, Allylalkohol, Protoanemonin oder dessen Strukturisomere und optional Kondensations- und Additionsprodukte insbesondere Ester dieser Komponenten; Prozessstabilisatoren aus der Gruppe der Hydrochinone, Phenothiazine, N-oxidhaltige Verbindungen wie TEMPOL und deren Derivate.

In der Praxis enthält der Prozessstrom aus der (Meth)acrolein-Synthese eine oder mehrere der oben genannten Nebenkomponenten.

Die (Meth)acrylsäure-Konzentration in dem erfindungsgemäß verwendeten Prozessstrom aus der (Meth)acrolein-Synthese liegt typischerweise im Bereich von 8 bis 50 Gew.-%, und damit deutlich höher als in CN 102229691 beschrieben. In dem Prozessstrom können außerdem weitere Nebenkomponenten wie z.B. Formaldehyd, Essigsäure und verschiedene weitere Säuren, Hydrochinon und Furan-Komponenten enthalten sein.

Bevorzugt liegt die (Meth)acrylsäure-Konzentration in dem Prozessstrom aus der (Meth)acrolein-Synthese im Bereich von 8 bis 40 Gew.-%, besonders bevorzugt von 8 bis 30 Gew.%, ganz besonders bevorzugt von 10 bis 25 Gew.-%, bezogen auf das Gesamtgewicht des Prozessstroms.

Ein typischer Prozessstrom aus der (Meth)acrolein-Synthese, der im erfindungsgemäßen Verfahren eigesetzt werden kann, enthält:
8 bis 50 Gew.-% (Meth)acrylsäure,
0,01 bis 20 Gew.-% Formaldehyd,
jeweils 0 bis 10 Gew.-%, bevorzugt 0 bis 5 Gew.-%, ganz besonders bevorzugt 0,1 bis 3 Gew.-% Essigsäure und/oder Ameisensäure,
0 bis 10 Gew.-%, bevorzugt 0 bis 3 Gew.-%, besonders bevorzugt 0,1 bis 3 Maleinsäureanhydrid,
0 bis 2 Gew.-%, bevorzugt 0,05 bis 1 Gew.-% Benzoesäure,
0 bis 2 Gew.-%, bevorzugt 0,01 bis 2 (Meth)acrolein,
0 bis 600 Gew.-ppm, bevorzugt 20 bis 300 Gew.-ppm Hydrochinon und gegebenenfalls
0 bis 0,5 Gew.-% Allylalkohol und/oder
0 bis 1000 Gew.-ppm Protoanemonin,
bezogen auf das Gesamtgewicht des Prozessstroms.

In einer besonders bevorzugten Ausführungsform enthält der Prozessstrom aus der (Meth)acrolein-Synthese, der im erfindungsgemäßen Verfahren eigesetzt werden kann:
10 bis 25 Gew.-% (Meth)acrylsäure,
1 bis 5 Gew.-% Formaldehyd,
0,1 bis 5 Gew.-%Essigsäure,
0,05 bis 3 Gew.-% Ameisensäure,
0,01 bis 2 Gew.-% (Meth)acrolein,
0,05 bis 1 Gew.-% Benzoesäure,
20 bis 300 Gew.-ppm Hydrochinon, und
0,1 bis 3 Gew.-% Maleinsäureanhydrid,
bezogen auf das Gesamtgewicht des Prozessstroms.

Ein typischer Prozessstrom aus der (Meth)acrolein-Synthese, der im erfindungsgemäßen Verfahren eigesetzt werden kann, hat beispielsweise die in Tabelle 1 wiedergegebene Zusammensetzung:

**Tab. 1: Zusammensetzung eines typischen (meth)acrylsäurehaltigen Prozessstroms aus der (Meth)acrolein-Synthese (ermittelt durch GC-MS-Analyse)**

| Komponente | Konzentration | Einheit |
|---|---|---|
| | | |
| (Meth)acrylsäure | 8 bis 30 | Gew.-% |
| Formaldehyd | 0 bis 10 | Gew.-% |
| Essigsäure | 0,5 bis 5,0 | Gew.-% |
| Maleinsäureanhydrid/Maleinsäure | 0 bis 3,0 | Gew.-% |
| Ameisensäure | 0 bis 2,0 | Gew.-% |
| Benzoesäure | 0 bis 2,0 | Gew.-% |
| (Meth)acrolein | 0 bis 5,0 | Gew.-% |
| Allylalkohol | 0 bis 0,5 | Gew.-% |
| Hydrochinon | 0 bis 600 | Gew.-ppm |
| Protoanemonin | 0 bis 1000 | Gew.-ppm |
| Wasser | Rest | |

Typischerweise ist das erfindungsgemäße Verfahren dadurch gekennzeichnet, dass
a. der Prozessstrom eine oder mehrere Verbindungen, ausgewählt aus Formaldehyd, Essigsäure, Maleinsäure, Maleinsäureanhydrid, Terephthalsäure, Ameisensäure, Benzoesäure, (Meth)acrolein, Allylalkohol, Protoanemonin oder dessen Strukturisomere, Terephthalaldehyd, Milchsäure, Laktid, Diformylfuran, Hydroxyzimtsäure oder deren Strukturisomere oder Dihydropyrancarbaldehyd und optional Kondensations- und Additionsprodukte oder Ester dieser Komponenten, enthält und/oder
b. der Prozessstrom Prozessstabilisatoren, ausgewählt aus Hydrochinonen, Phenothiazinen, N-oxidhaltigen Verbindungen, vorzugsweise 4-hydroxy-2,2,6,6-tetramethylpiperidin-1-oxyl, und/oder deren Kombination, enthält.

Während der Bildung der Poly(meth)acrylsäure können die oben genannten Nebenkomponenten zu deren Folgeprodukten chemisch umgesetzt werden. Der Begriff *"Folgeprodukte"* in der vorliegenden Patentanmeldung bezieht sich somit auf Verbindungen, die während der Bildung der Poly(meth)acrylsäure aus Nebenkomponenten gebildet werden.

Die Polymerisation der (Meth)acrylsäure erfolgt optional in Gegenwart von Reglern, radikalbildenden Initiatoren, vorzugsweise wässrigen Persulfatlösungen, besonders bevorzugt Lösungen von Natrium-, Kalium- oder Ammoniumpersulfaten, wie Na₂S₂O₈; und/oder Reduktionsmitteln, bevorzugt NaHSO₃-Lösungen, Azo-Initiatoren oder organischen Peroxid-Initiatoren, bevorzugt tert.-Butylhydroperoxid, oder einer Kombination aus mindestens einer Eisen-Verbindung mit H₂O₂-Lösung (Fentons Reagenz). Dabei kann dem Reaktionsgemisch gegebenenfalls zusätzliche (Meth)acrylsäure zugefügt werden.

Vorzugsweise liegt die Reaktionstemperatur während der Polymerisation zwischen 20 und 150 °C, besonders bevorzugt zwischen 80 und 120 °C.

Die resultierende Poly(meth)acrylsäure liegt teilweise oder vollständig gelöst in Wasser vor, das aus der Oxidationsreaktion bei der Herstellung von (Meth)acrolein chemisch entstanden ist. Die Poly(meth)acrylsäure kann weiter verarbeitet und funktionalisiert werden, bevorzugt verestert. Die Poly(meth)acrylsäure und/oder die funktionalisierte Poly(meth)acrylsäure kann in fester Form oder teilweise oder vollständig gelöst in Wasser vorliegen, das gegebenenfalls aus der Oxidationsreaktion stammt, das bei der Herstellung von (Meth)acrolein chemisch entstanden ist.
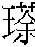 Bevorzugt wird der Prozessstrom zur Deaktivierung der Aldehyde oder anderer störender Bevorzugt wird der Prozessstrom zur Deaktivierung der Aldehyde oder anderer störender Nebenkomponenten vorbehandelt, bevorzugt mit Harnstoff. Die Vorbehandlung der Aldehyde (beispielsweise Formaldehyd) erfolgt mit unterstöchiometrischen Mengen oder überstöchiometrischen Mengen Harnstoff, bevorzugt mit äquimolar eingesetztem Harnstoff oder anderen geeigneten Fällungsmedien. Das gegebenenfalls in Lösung verbleibende Produkt kann im Prozessstrom verbleiben oder wird nach Ausfällung abfiltriert. Der so behandelte Prozessstrom oder ein unbehandelter Prozessstrom wird der Polymerisation zugeführt.

Die wässrige radikalische Polymerisation erfolgt vorzugsweise in Gegenwart eines Radikalinitiators und/oder eines Molekulargewichtsreglers, vorzugsweise bei einem pH < 4, besonders bevorzugt bei einem pH < 3.

Als Radikalinitiator kommt insbesondere Natrium-, Kalium- oder Ammoniumperoxodisulfat in Betracht. Ebenfalls geeignet ist ein Redoxpaar z.B. auf Basis von H₂O₂ / Fe²⁺ (Fentons Reagenz). Weiterhin geeignet sind wasserlösliche Azo-Initiatoren, wie z.B. Azobis(2-amidinopropan)dihydrochlorid.

Als geeignete Molekulargewichtsregler können beispielsweise Alkalisulfite oder Hydrogensulfite eingesetzt werden. Ebenfalls verwendet werden können Phosphinsäurederivate sowie organische Verbindungen, welche eine Thiolgruppe enthalten, wie z.B. Mercaptoethanol.

In einer bevorzugten Ausgestaltung des erfindungsgemäßen Verfahrens wird die Polymerisation in Gegenwart einer Kombination aus Natriumpersulfat und Natriumhydrogensulfit durchgeführt.

In einer weiteren bevorzugten Ausgestaltung des erfindungsgemäßen Verfahrens wird die Polymerisation in Gegenwart von Ammoniumperoxodisulfat durchgeführt.

Die (Meth)acrylsäure wird erfindungsgemäß im wässrigen Medium, vorzugsweise bei Temperaturen von 20 bis 150 °C, besonders bevorzugt bei Temperaturen von 80 bis 120 °C in Gegenwart von wasserlöslichen Radikalbildnern, Reduktionsmitteln und Reglern, wie z.B. Schwefelverbindungen mit Schwefel in der Oxidationsstufe +IV, polymerisiert. Die Polymerisation kann unter Normaldruck, unter erhöhtem Druck oder auch unter vermindertem Druck durchgeführt werden. Das Arbeiten unter erhöhtem Druck bietet sich in den Fällen an, in denen leichtflüchtige Bestandteile im System verbleiben sollen, z. B. wenn man Schwefeldioxid als Regler einsetzt oder die Polymerisation bei Temperaturen oberhalb des Siedepunktes von Wasser durchführt. Die Polymerisation erfolgt vorteilhafterweise unter einer Inertgasatmosphäre.

Die erhaltene Poly(meth)acrylsäure kann isoliert oder verestert werden.

In einer bevorzugten Ausgestaltung des erfindungsgemäßen Verfahrens wird die erhaltene Poly(meth)acrylsäure mit (Methoxy)polyethylenglykol verestert. Die Veresterung des erhaltenen Poly(meth)acrylsäure kann in Gegenwart oder auch in Abwesenheit von Katalysatoren erfolgen. Zur Veresterung können unter anderem Säuren oder Basen beigegeben werden. Als Säure-Katalysatoren verwendet man beispielsweise Schwefelsäure, p-Toluolsulfonsäure, Benzolsulfonsäure, Methansulfonsäure, Phosphorsäure, phosphorige Säure oder Chlorwasserstoffsäure.

In einer bevorzugten Ausgestaltung des erfindungsgemäßen Verfahrens wird kein Katalysator eingesetzt.

Die Veresterung kann beispielsweise so durchgeführt werden, dass man die wässrigen Lösungen nach der Polymerisation gegebenenfalls mit einer als Katalysator wirkenden Säure und (Methoxy)polyethylenglykol versetzt und während der Reaktion Wasser abdestilliert. Die Destillation des Wassers aus der Mischung erfolgt meistens unter Atmosphärendruck, kann jedoch auch im Vakuum durchgeführt werden. Oft ist es von Vorteil, wenn während der Destillation ein Gasstrom durch die Reaktionsmischung geleitet wird, um das Wasser und andere flüchtige Anteile rascher zu entfernen. Als Gasstrom kann Luft oder Stickstoff verwendet werden. Man kann das Wasser jedoch auch unter vermindertem Druck entfernen und zusätzlich einen Gasstrom durch das Reaktionsgemisch leiten. Alternativ kann auch ein Schleppmittel, wie z.B. Toluol, eingesetzt werden, um die Effizienz der Destillation zu erhöhen. Um das Wasser bzw. das Wasser-Schleppmittelgemisch aus dem Reaktionsgemisch zu destillieren, muss man der Mischung Energie zuführen. Geeignete Apparate hierfür sind beispielsweise beheizbare Rührkessel, Rührkessel mit außenliegenden Wärmetauschern, Rührkessel mit innenliegenden Wärmetauschern und Dünnschichtverdampfer. Das verdampfende Wasser bzw. das Wasser-Schleppmittelgemisch wird über eine Brüdenleitung aus dem Reaktionsmedium abgeführt und in einem Wärmetauscher (ggf. in einer Kolonne) kondensiert. Wird kein Schleppmittel eingesetzt und enthält das Destillat nur geringe Mengen an organischen Inhaltsstoffen, kann es über eine Kläranlage entsorgt werden.

Im Anschluss oder gleichzeitig mit dem Entfernen von Wasser aus dem Reaktionsgemisch tritt eine Kondensationsreaktion zwischen der Poly(meth)acrylsäure und dem (Methoxy)polyethylenglykol ein. Das dabei entstehende Wasser wird ebenfalls aus dem Reaktionsmedium entfernt. Die Veresterung wird beispielsweise bei Temperaturen zwischen 100 und 250 °C durchgeführt. Die Temperatur richtet sich dabei nach der Lage des Gleichgewichts der Veresterungsreaktion, dem Reaktionsapparat und der Verweilzeit. In diskontinuierlich betriebenen Rührkesseln benötigt man beispielsweise 1 bis 15 Stunden und führt die Kondensation meistens in einem Temperaturbereich von 100 bis 250 °C durch.

Bevorzugt erfolgt die Veresterung bei erhöhten Temperaturen von 120 bis 200 °C, insbesondere 150 bis 180 °C. Dadurch kann die Ausbeute signifikant gegenüber niedrigeren Temperaturen verbessert werden.

In einer Verfahrensvariante kann man zunächst die Säuregruppen enthaltende Poly(meth)acrylsäure entwässern und das dabei erhaltene Pulver oder Granulat mit dem (Methoxy)polyethylenglykol kondensieren.

Am Ende der Reaktion wird das Reaktionsgemisch abgekühlt und ggf. in Wasser gelöst. Gleichzeitig oder im Anschluss an das Lösen des Kondensationsprodukts kann gegebenenfalls eine Neutralisation verbliebener Säuregruppen erfolgen. Als Neutralisationsmittel werden (Erd-)Alkalimetall(hydr)oxide in fester Form oder in Form von 10 bis 70 %-igen wässrigen Lösungen oder Aufschlämmungen in Wasser verwendet. Beispiele für geeignete Basen sind Lithiumhydroxid, Natriumhydroxid, Kaliumhydroxid, Calciumoxid, Calciumhydroxid, Magnesiumoxid, Magnesiumhydroxid, Aluminiumoxid und Aluminiumhydroxid. Je nach Neutralisationsgrad können die wässrigen Lösungen der Copolymerester pH-Werte zwischen 2,5 und 7 haben.

Nach der Kondensation kann die Reaktionsmasse auch unverdünnt bleiben. Beim Abkühlen unter 60 °C erstarrt sie zu einer wachsartigen Masse, die leicht wieder aufgeschmolzen werden kann. Daraus ergeben sich Variationen für den Transport. Man kann beispielsweise die Reaktionsmasse in Fässer abfüllen, aus denen das Kondensationsprodukt wieder aufgeschmolzen werden kann. Dazu eignen sich beheizbare und wärmeisolierte Kesselwagen und Lagerbehälter.

Alternativ ist es auch möglich, eine wässrige Lösung mit einem Wertstoffgehalt von 60 bis 90 % herzustellen und zu handhaben. Die Viskosität solcher Lösungen beträgt beispielsweise 1000 bis 100.000 mPas.

Durch Zugabe von Wasser kann die Erstarrungstemperatur gesenkt werden. Hierbei kann vorzugsweise das während der Veresterung abdestillierte Wasser wieder eingesetzt werden. Die Schmelztemperatur der Polymerschmelze ist dabei u.a. abhängig von der Länge der Seitenkette. Ein typisches Produkt mit einer MPEG1000-Seitenkette schmilzt beispielsweise ohne Wasser im Bereich von 30 °C bis 40 °C, ist aber danach noch sehr zähflüssig. Durch Zusatz geringer Mengen von Wasser erhält man ein schon bei Raumtemperatur fließfähiges Konzentrat. Durch Zusatz von 10 bis 30 Gew.-% Wasser lassen sich die Lösungen bei 20 bis 40 °C gut handhaben. Diese Wirkung des Wassers (Erniedrigung der Schmelzviskosität) kann für die Handhabung der Schmelze von Vorteil sein. Dadurch kann die Lagertemperatur gesenkt werden.

Erfindungsgemäß hergestellte Poly(meth)acrylsäuren und funktionalisierte Poly(meth)acrylsäuren, und insbesondere deren erfindungsgemäß hergestellten wässrige Lösungen, können vorteilhaft als Fließverbesserer, vorzugsweise für Beton, Asphalt oder Teer, verwendet werden. Die erfindungsgemäß hergestellten Poly(meth)acrylsäuren und funktionalisierte Poly(meth)acrylsäuren verhalten sich bezüglich der erzielbaren Fließverbesserung und Verarbeitungsdauer ähnlich gut wie vergleichbare kommerziell erhältliche Fließverbesserer für die Bauchemie. Die Erfindung betrifft die Verwendung der Poly(meth)acrylsäuren und funktionalisierten Poly(meth)acrylsäuren als Additive, Fließverbesserer und Wasserreduktionsmittel.

Erfindungsgemäß hergestellte Poly(meth)acrylsäuren und funktionalisierte Poly(meth)acrylsäuren sind demnach wichtige Zwischenprodukte für die Bauchemie.

Gegenstand der vorliegenden Erfindung ist somit auch die durch das hier beschriebene erfindungsgemäße Verfahren erhältliche Poly(meth)acrylsäure sowie die durch das hier beschriebene erfindungsgemäße Verfahren erhältliche funktionalisierte Poly(meth)acrylsäure.

Gegenstand der vorliegenden Erfindung ist auch die Verwendung eines (Meth)acrylsäure enthaltenden Prozessstroms aus der (Meth)acrolein-Synthese für die radikalische Homo- oder Co-Polymerisation. Unter *"Homo-Polymerisation"* wird im vorliegenden Fall verstanden, dass dem Prozessstrom vor der Polymerisation keine weiteren polymerisierbaren Monomere zugegeben werden bzw. der Prozessstrom während der Polymerisation nicht mit weiteren polymerisierbaren Monomeren vermischt wird. Unter Co-Polymerisation wird im vorliegenden Fall verstanden, dass dem Prozessstrom vor oder während der Polymerisation weitere polymerisierbare Monomere zugegeben werden, insbesondere auch die Mischung aus Acrylsäure und Methacrylsäure (sowohl in Prozessstrom-Form als auch in synthetischer Qualität), und/oder Maleinsäure.

Die vorliegende Erfindung wird anhand der nachfolgenden Beispiele näher beschrieben, die jedoch nicht einschränkend sind.

### Beispiele

### Charakterisierung und Vorbehandlung des Prozessstroms (Beispiele 1 bis 4)

In den folgenden Beispielen wurde ein acrylsäurehaltiger Prozessstrom mit einer Konzentration von

| | |
|---|---|
| 14,1 Gew.-% | Acrylsäure, |
| 2,9 Gew.-% | Formaldehyd, |
| 0,9 Gew.-% | Essigsäure, |
| 0,2 Gew.-% | Ameisensäure, |
| 0,1 Gew.-% | Acrolein, |
| 0,2 Gew.-% | Benzoesäure, |
| 129 ppm | Hydrochinon, |
| 0,8 Gew.-% | Maleinsäureanhydrid |

bezogen auf das Gewicht des Prozessstroms, eingesetzt.

Die vorhandenen Aldehyde (vornehmlich Formaldehyd) wurden mit äquimolar eingesetztem Harnstoff gefällt und abfiltriert, um eine bestimmungsgemäße Polymerisation zu erleichtern.

### Beispiel 1

In einem gerührten 5 L-Doppelmantelglasreaktor mit Rückflusskühler werden 400 g deionisiertes Wasser vorgelegt und auf 100 °C erhitzt.

Im Anschluss werden innerhalb von 7 Stunden 2624 g eines Gemisches aus 2475 g des acrylsäurehaltigen Prozessstroms und 149 g Methacrylsäure sowie 336 g einer 40%-igen NaHSO₃-Lösung zu dosiert. Zeitgleich werden innerhalb von 8 Stunden 524 g einer 23%-igen Na₂S₂O₈-Lösung zu dosiert.

Nach Ende der Dosierung wird die Reaktionsmischung für 1 Stunde bei 100°C gehalten.

Anschließend wird der Rückflusskühler durch eine Claissenbrücke ersetzt und unter einem Vakuum von 50 mbar 2222 g Wasser abgezogen.

Dann werden 2200 g MPEG 1000 in den Reaktor zugegeben und unter Vakuum für weitere 4 Stunden Wasser abgezogen. Die Temperatur wird dabei bis auf 180 °C erhöht.

Der Reaktor wird auf ca. 80 °C abgekühlt und entleert.

### Beispiel 2

In einem gerührten 5 L-Doppelmantelglasreaktor mit Rückflusskühler werden 250 g deionisiertes Wasser vorgelegt und auf 100 °C erhitzt.

Im Anschluss werden innerhalb von 2 Stunden 190 g einer 40%-igen NaHSO₃-Lösung zu dosiert. Zeitgleich wird innerhalb von 3 Stunden 325 g einer 30%-igen Na₂S₂O₈-Lösung zu dosiert.

10 Minuten nach Beginn der NaHSO₃- und der Na₂S₂O₈-Dosierung wird ein weiterer Zustrom gestartet, der innerhalb von 2 Stunden 1641 g eines Gemisches aus 1578 g des acrylsäurehaltigen Prozessstroms und 93 g Methacrylsäure dosiert.

Nach Ende der Dosierungen wird der Rückflusskühler durch eine Claissenbrücke ersetzt und unter einem Vakuum von 50 mbar 1293 g Wasser abgezogen.

Dann werden 2750 g MPEG 2000 in den Reaktor zugegeben und unter Vakuum für weitere 4 Stunden Wasser abgezogen. Die Temperatur wird dabei bis auf 180 °C erhöht.

Der Reaktor wird auf ca. 80 °C abgekühlt und entleert.

### Beispiel 3

In einem 500mL-Rundkolben mit Destillationskolonne werden 110 g MPEG1000 vorgelegt und aufgeschmolzen und auf 150°C erhitzt.

Im Anschluss wird innerhalb von 3 Stunden 170 g des acrylsäurehaltigen Prozessstroms dosiert. Zeitgleich wird innerhalb von 4 Stunden eine Lösung von 1,32 g TBPEH (Tert-Butylperoxy-2-Ethylhexanoat) in 262,68 g Toluol dosiert.

Während der Dosierung wird Wasser und Toluol über Kopf abgezogen.

Nach Ende der Dosierung wird die Temperatur der Mischung auf 170 °C erhöht und weiterhin Wasser und Toluol abgezogen.

Nach weiteren 3 Stunden wird der Kolben auf ca. 80 °C abgekühlt und entleert.

### Beispiel 4

In einem gerührten 1 L-Doppelmantelglasreaktor mit Rückflusskühler werden 100 g deionisiertes Wasser vorgelegt und auf 100 °C erhitzt.

Im Anschluss werden innerhalb von 7 Stunden 630 g eines Gemisches aus 592,7 g des acrylsäurehaltigen Prozessstroms und 37,3 g Methacrylsäure sowie 126 g einer 40%-igen NaHSO₃-Lösund zu dosiert. Zeitgleich wird innerhalb von 8 Stunden 131 g einer 23%-igen Na₂S₂O₈-Lösung zu dosiert.

Nach Ende der Dosierung wird die Reaktionsmischung noch für 1 Stunden bei 100 °C gehalten.

Von der erhaltenen Polymerlösung werden 200 g in einem 500 mL Rundkolben mit Claissenbrücke vorgelegt und bei einem Vakuum von ca. 50 mbar 145 g Wasser abgezogen.

Dann werden 110 g MPEG1000 zugegeben, 50 mbar Vakuum angelegt und die Mischung bis auf 170 °C erhitzt. Dabei wird weiterhin Wasser abgezogen.

5 Stunden nach Zugabe des MPEG1000 wird die Mischung auf ca. 80 °C abgekühlt und der Kolben entleert.

Die im Rahmen der Erfindung hergestellten Polymere wurden in anwendungstechnischen Untersuchungen hinsichtlich ihrer Eignung und Wirksamkeit als Beton-Fließverbesserer getestet. Alle Polymere wurden den gleichen Prozeduren unterworfen.

Eingesetzte Versuchsapparatur und Metallformen sind in der Tabelle 2 und die verwendeten Rohstoffe in der Tabelle 3 aufgeführt. Die eingesetzten Metallformen sind außerdem in Abbildung 2 dargestellt.

**Tab. 2: Versuchsapparatur und Metallformen**

| | |
|---|---|
| Mörtelmischer | ToniMIX Bauform 6214 |
| Metallform 1 | konischer Kegelstumpf nach Norm DIN EN 12350-5 (Abmessungen verkleinert um den Faktor 2,35) |
| | D = 85 mm, d = 55 mm, h = 85 mm |
| Metallform 2 | konischer Kegelstumpf nach Norm DIN EN 12350-5 (Abmessungen verkleinert um den Faktor 3,25) |
| | D = 62 mm, d = 40 mm, h = 62 mm |

**Tab. 3: Verwendete Rohstoffe**

| |
|---|
| CEN Normsand nach DIN EN 196-1, Normsand GmbH |
| Portlandzement CEM I 52,5 N "White" EN 197-1, Lafarge Holcim |
| Portlandzement CEM I 42,5N DIN EN 197-1, Spenner Zement |

Im Folgenden werden die anwendungstechnischen Untersuchungen und deren Ergebnisse beschrieben.

### Anwendungstechnische Prüfung des Ausbreitmaßes zur Bestimmung der fließverbessernden Eigenschaften bei unterschiedlichen PCE-Konzentrationen

Es wird 1350 g Normsand in den Sandzulaufbehälter des Mörtelmischers sowie 450 g Zement in dessen Rührschüssel eingewogen.

Der Fließverbesserer wird als wässrige Polymer-Lösung in ein Becherglas eingewogen und mit der zum Erreichen einer Gesamtwassermenge von 225 g benötigten Wassermenge gemischt. Die Menge der Polymer-Lösung wird (unter Berücksichtigung der Konzentration des Fließverbesserer in der wässrigen Lösung) gemäß der zu untersuchenden Wirkstoffkonzentration im Zement gewählt.

Nach Zugabe der wässrigen Polymer-Lösung zu dem in der Schüssel befindlichen Zement wird diese in Arbeitsstellung gebracht und das automatische Programm EN196-1 gestartet:
Die Mischung wird für 30 sec mit einer Umdrehungszahl von 65 U/min gerührt, unter weiterem Rühren wird dann über einen Zeitraum von 30 sec der eingewogene Normsand in die Mischschüssel dosiert.

Nach der Zugabe des Normsandes wird die Mörtelmischung für 30 sec mit einer Umdrehungszahl von 130 U/min weiter gerührt.

Anschließend folgt eine Ruhephase von 90 sec, in der während der ersten 30 sec die Mischschüssel innen mittels einem Schaber abgestreift wird.

Zum Abschluss des Mischvorgangs wird noch einmal für 60 sec bei 130 U/min gerührt.

Nach Beendigung des Programms wird der Mörtel mit einem Schaber vom Rand der Schüssel entfernt, durchmischt und in die mit VE-Wasser angefeuchtete Metallform 1, die auf einer ebenfalls mit VE-Wasser angefeuchteten Metallplatte steht, gefüllt.

Durch 10-maliges Stochern mit einem Spatel werden eventuelle Lufteinschlüsse entfernt und der Mörtel verdichtet.

Anschließend wird die Metallform zügig senkrecht nach oben angehoben, so dass der Mörtel auslaufen kann.

Nach dem Abbinden und Trocknen des Mörtels (in der Regel am nächsten Tag), wird das Ausbreitmaß in zwei Richtungen vermessen und der Mittelwert in Millimetern angegeben.

Die Ergebnisse sind in den Tabellen 4 und 5 zusammengefasst.

**Tab. 4: Ausbreitmaße in Portlandzement CEM I 52,5 N "White", DIN EN 197-1, Lafarge Holcim**

| Fließverbesserer | Konzentration kg_{PCE}/kg_{Zement} | Ausbreitmaß (Metallform 1) mm | |
|---|---|---|---|
| Beispiel 1 | 0,20 % | 177,5 | |
| Beispiel 1 | 0,30 % | 224,0 | |
| Beispiel 1 | 0,40 % | 229,3 | leichtes Bluten |
| Beispiel 1 | 0,50 % | 236,5 | leichtes Bluten |
| Beispiel 1 | 0,75 % | 243,8 | Bluten |
| | | | |
| Beispiel 2 | 0,20% | 142 | |
| Beispiel 2 | 0,30% | 198,5 | |
| | | | |
| Beispiel 3 | 0,30% | 175 | |
| Beispiel 3 | 0,50% | 253 | leichtes Bluten |
| | | | |
| Beispiel 4^{a)} | 0,10 % | 87,8 | |
| Beispiel 4^{a)} | 0,20 % | 195,5 | |
| Beispiel 4^{a)} | 0,50 % | 252,3 | |
| Beispiel 4^{b)} | 0,10 % | 87 | |
| Beispiel 4^{b)} | 0,20 % | 211 | |
| Beispiel 4^{b)} | 0,50 % | 248,3 | leichtes Bluten |

| | | | |
|---|---|---|---|
| ^{a), b)} Von der Rezeptur nach Beispiel 4 wurden zwei Ansätze hergestellt, die beide nach der beschriebenen Vorgehensweise getestet wurden. Die Ergebnisse sind in der Tabelle mit "Beispiel 4^{a)}" und "Beispiel 4^{b)}" gekennzeichnet. | | | |

**Tab. 5: Ausbreitmaße in Portlandzement CEM I 42,5 N, DIN-EN 197-1, Spenner Zement**

| Fließverbesserer | Konzentration kg_{PCE}/kg_{Zement} | Ausbreitmaß (Metallform 1) mm | |
|---|---|---|---|
| Beispiel 2 | 0,40 % | 150,8 | leichtes Bluten, Mörtel nicht vollständig abgebunden |
| Beispiel 3 | 0,40 % | 245 | |
| | | | |
| Beispiel 4^{a)} | 0,10 % | 95,8 | |
| Beispiel 4^{a)} | 0,30 % | 136,0 | |
| Beispiel 4^{a)} | 0,50 % | 201,3 | |
| Beispiel 4^{a)} | 1,00 % | 213,8 | |
| | | | |
| Beispiel 4^{b)} | 0,10 % | 107,8 | |
| Beispiel 4^{b)} | 0,30 % | 196,5 | |
| Beispiel 4^{b)} | 1,00 % | 217,3 | Bluten |

| | | | |
|---|---|---|---|
| ^{a), b)} Von der Rezeptur nach Beispiel 4 wurden zwei Ansätze hergestellt, die beide nach der beschriebenen Vorgehensweise getestet wurden. Die Ergebnisse sind in der Tabelle mit "Beispiel 4^{a)}" und "Beispiel 4^{b)"} gekennzeichnet. | | | |

### Anwendungstechnische Prüfung der Langzeitwirkung der fließverbessernden Eigenschaften (Konsistenzerhaltung des Mörtels)

Es werden 1350 g Normsand in den Sandzulaufbehälter des Mörtelmischers sowie 450 g Zement in dessen Rührschüssel eingewogen.

Der Fließverbesserer wird als wässrige Polymer-Lösung in ein Becherglas eingewogen und mit der zum Erreichen einer Gesamtwassermenge von 225 g benötigten Wassermenge gemischt. Die Menge der Polymer-Lösung wird (unter Berücksichtigung der Konzentration des Fließverbesserer in der wässrigen Lösung) gemäß der zu untersuchenden Wirkstoffkonzentration im Zement gewählt.

Nach Zugabe der wässrigen Polymer-Lösung zu dem in der Schüssel befindlichen Zement wird diese in Arbeitsstellung gebracht und das automatische Programm EN196-1 gestartet:
Die Mischung wird für 30 sec mit einer Umdrehungszahl von 65 U/min gerührt, unter weiterem Rühren wird dann über einen Zeitraum von 30 sec Normsand in die Mischschüssel dosiert.

Nach der Zugabe des Normsandes wird die Mörtelmischung für 30 sec mit einer Umdrehungszahl von 130 U/min weiter gerührt.

Anschließend folgt eine Ruhephase von 90 sec, in der während der ersten 30 sec die Mischschüssel innen mittels einem Schaber abgestreift wurde.

Zum Abschluss des Mischvorgangs wird noch einmal für 60 sec bei 130 U/min gerührt.

Nach Beendigung des Programms wird der Mörtel mit einem Schaber vom Rand der Schüssel entfernt, durchmischt und in die mit VE-Wasser angefeuchtete Metallform 2, die auf einer ebenfalls mit VE-Wasser angefeuchteten Metallplatte steht, gefüllt.

Durch 10-maliges Stochern mit einem Spatel wurden eventuelle Lufteinschlüsse entfernt und der Mörtel verdichtet.

Anschließend wird die Metallform zügig senkrecht nach oben angehoben, so dass der Mörtel auslaufen kann.

Im Anschluss wird die Mischschüssel erneut in Arbeitsstellung gebracht und über das manuelle Programm eine Umdrehungszahl von 65 U/min eingestellt.

Nach zusätzlichen Mischzeiten von insgesamt 15 min, 30 min, 45 min, 60 min, 75 min und 90 min wird jeweils erneut die Metallform wie oben beschrieben befüllt, Lufteinschlüsse entfernt und anschließend zügig senkrecht nach oben angehoben, so dass der Mörtel auslaufen kann.

Nach dem Abbinden und Trocknen des Mörtels (in der Regel am nächsten Tag), werden die verschiedenen Ausbreitmaße in zwei Richtungen vermessen und der Mittelwert in Millimetern angegeben.

Den Ergebnissen der ersten Messung wird der Zeitpunkt 0 zugewiesen, den Folgemessungen dann die zusätzlichen Gesamtmischzeiten.

Die Ergebnisse sind in den Tabellen 6 und 7 zusammengefasst.

**Tab. 6: Ausbreitmaße in Portlandzement CEM I 42,5 N, DIN-EN 197-1, Spenner Zement in Abhängigkeit von der Zeit**

| | Beispiel 3 | Beispiel 3 | Beispiel 4^{a)} | Beispiel 4^{b)} |
|---|---|---|---|---|
| Konzentration kg_{PCE}/kg_{Zement} | 0,75 % | 1,0 % | 0,5 % | 0,5 % |
| Zus. Mischzeit min. | Ausbreitmaß (Metallform 2) mm | Ausbreitmaß (Metallform 2) mm | Ausbreitmaß (Metallform 2) mm | Ausbreitmaß (Metallform 2) mm |
| 0 | 162 | 168 | 147,5 | 152,5 |
| 15 | 169 | 169 | 104 | 105 |
| 30 | 101,5 | 146,5 | 87,5 | 105 |
| 45 | 93,5 | 94 | 80 | 102,5 |
| 60 | 75,5 | 91 | 70 | 100 |
| 75 | 64 | 81 | 60 | 90 |
| 90 | 63 | 64 | | 67,5 |

| | | | | |
|---|---|---|---|---|
| ^{a), b)} Von der Rezeptur nach Beispiel 4 wurden zwei Ansätze hergestellt, die beide nach der beschriebenen Vorgehensweise getestet wurden. Die Ergebnisse sind in der Tabelle mit "Beispiel 4^{a)}" und "Beispiel 4^{b)}" gekennzeichnet. | | | | |

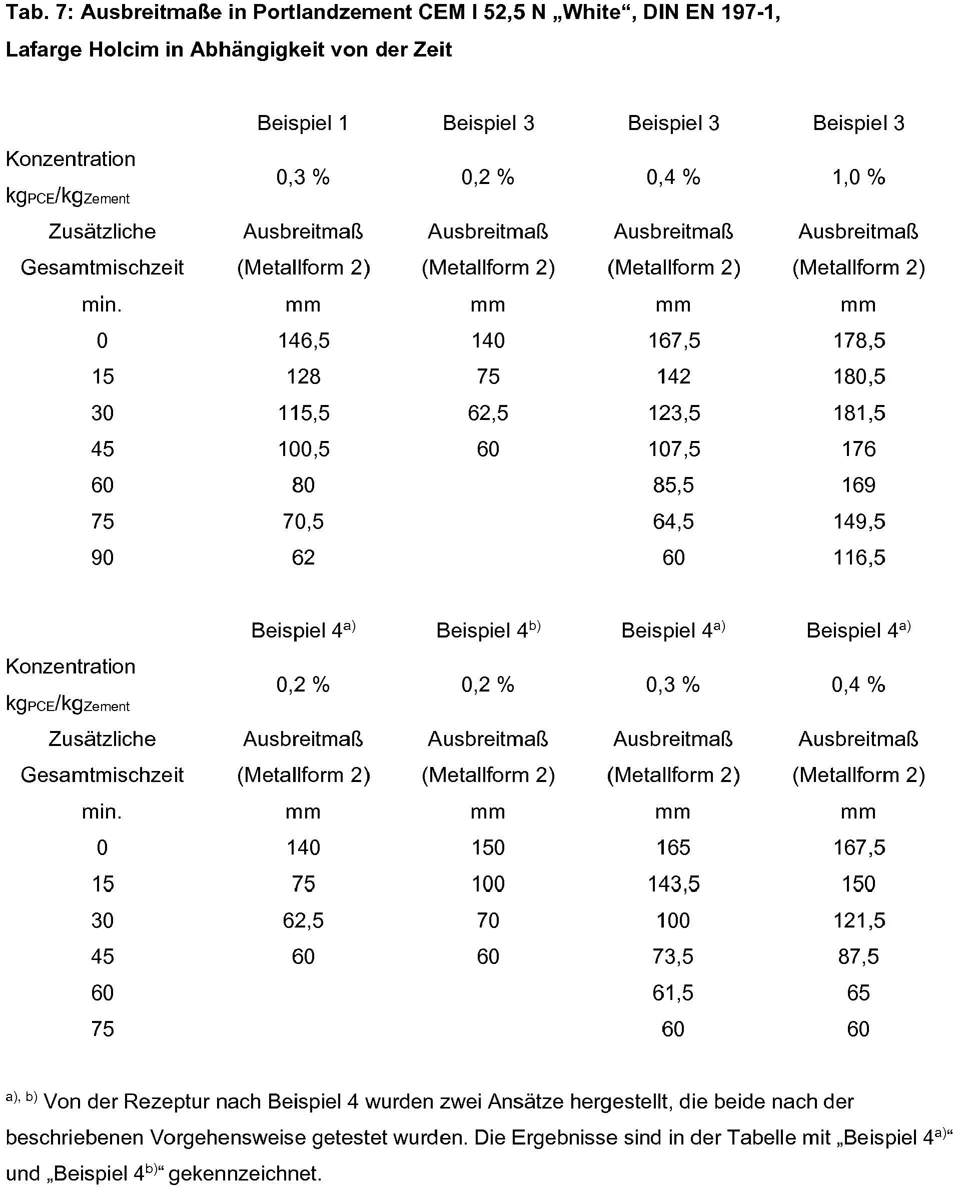

### Anwendungstechnische Prüfung des Ausbreitmaßes zur Bestimmung der fließverbessernden Eigenschaften bei variierenden Wasser/Zement- Verhältnissen

Es werden 1350 g Normsand in den Sandzulaufbehälter des Mörtelmischers sowie 450 g Zement in dessen Rührschüssel eingewogen.

Der Fließverbesserer wird als wässrige Polymer-Lösung in ein Becherglas eingewogen und mit der zum Erreichen des zu untersuchenden Wasser/Zement-Verhältnisses (w/z-Verhältnis) benötigten Wassermenge gemischt. Die Menge der Polymer-Lösung wird (unter Berücksichtigung der Konzentration des Fließverbesserer in der wässrigen Lösung) gemäß der zu untersuchenden Wirkstoffkonzentration im Zement gewählt.

Nach Zugabe der wässrigen Polymer-Lösung zu dem in der Schüssel befindlichen Zement wird diese in Arbeitsstellung gebracht und das automatische Programm EN196-1 gestartet:

Die Mischung wird für 30 sec mit einer Umdrehungszahl von 65 U/min gerührt, unter weiterem Rühren wird dann über einen Zeitraum von 30 sec der eingewogene Normsand in die Mischschüssel dosiert.

Nach der Zugabe des Normsandes wird die Mörtelmischung für 30 sec mit einer Umdrehungszahl von 130 U/min weiter gerührt.

Anschließend folgt eine Ruhephase von 90 sec, in der während der ersten 30 sec die Mischschüssel innen mittels einem Schaber abgestreift wird.

Zum Abschluss des Mischvorgangs wurde noch einmal für 60 sec bei 130 U/min gerührt.

Nach Beendigung des Programms wird der Mörtel mit einem Schaber vom Rand der Schüssel entfernt, durchmischt und in die mit VE-Wasser angefeuchtete Metallform 1, die auf einer ebenfalls mit VE-Wasser angefeuchteten Metallplatte steht, gefüllt.

Durch 10-maliges Stochern mit einem Spatel werden eventuelle Lufteinschlüsse entfernt und der Mörtel verdichtet.

Anschließend wird die Metallform zügig senkrecht nach oben angehoben, so dass der Mörtel auslaufen kann.

Nach dem Abbinden und Trocknen des Mörtels (in der Regel am nächsten Tag), wird das Ausbreitmaß in zwei Richtungen vermessen und der Mittelwert in Millimetern angegeben.

Die Ergebnisse sind in der Tabelle 8 zusammengefasst. Zum Vergleich sind ebenfalls die Werte für das Ausbreitmaß ohne Einsatz des Fließverbesserers angegeben.

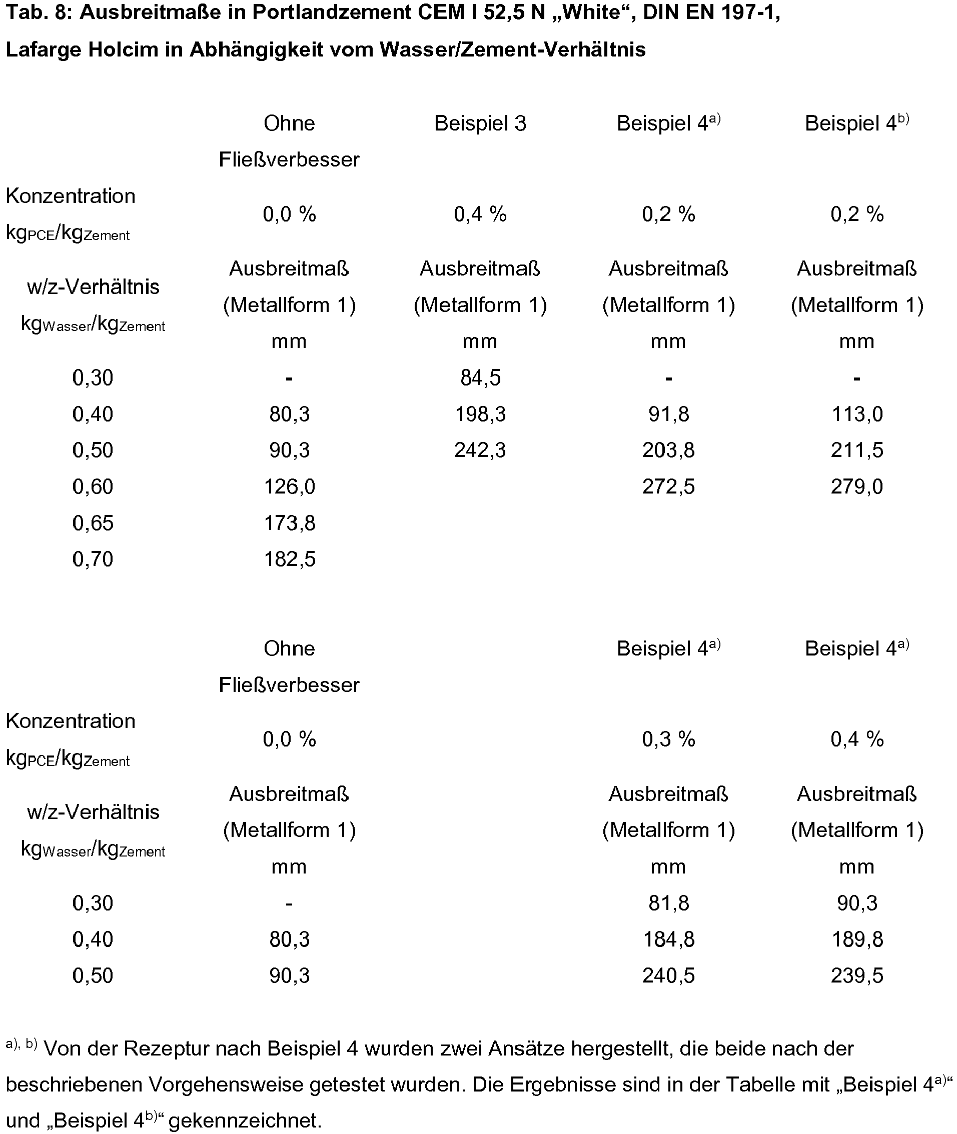

Zur Beurteilung der Ergebnisse der anwendungstechnischen Untersuchungen für erfindungsgemäßen Polymerisate wurden vergleichende Messungen mit den gleichen Methoden an kommerziell erhältlichen Produktmustern durchgeführt. Dabei wurde eine gute fließverbessernde Wirkung der erfindungsgemäßen Produkte festgestellt.

## Patentansprüche

1. Verfahren zur Herstellung einer Poly(meth)acrylsäure, **dadurch gekennzeichnet, dass** ein Prozessstrom aus der (Meth)acrolein-Synthese, der zwischen 8 und 50 Gew.-% (Meth)acrylsäure enthält, bezogen auf das Gewicht des Prozessstroms, in Anwesenheit von Wasser, das bei der Oxidationsreaktion der (Meth)acrolein-Synthese entstanden ist, einer radikalischen Polymerisation unterworfen wird.

2. Verfahren nach Anspruch 1, wobei die resultierende Poly(meth)acrylsäure, die mindestens teilweise in Wasser gelöst ist, das zumindest teilweise bei der Oxidationsreaktion der (Meth)acrolein-Synthese entstanden ist, einer weiteren Verarbeitung und/oder Funktionalisierung unterzogen wird, bei der eine funktionalisierte Poly(meth)acrylsäure gebildet wird.

3. Verfahren nach Anspruch 2, wobei es sich bei der Funktionalisierung um eine zumindest teilweise polymeranaloge Veresterung handelt.

4. Verfahren nach mindestens einem der Ansprüche 1 bis 3, wobei
a. der Prozessstrom eine oder mehrere Verbindungen, ausgewählt aus Formaldehyd, Essigsäure, Maleinsäure, Maleinsäureanhydrid, Terephthalsäure, Ameisensäure, Benzoesäure, (Meth)acrolein, Allylalkohol, Protoanemonin oder dessen Strukturisomere, Terephthalaldehyd, Milchsäure, Laktid, Diformylfuran, Hydroxyzimtsäure oder deren Strukturisomere oder Dihydropyrancarbaldehyd und optional Kondensations- und Additionsprodukte oder Ester dieser Komponenten, enthält und/oder
b. der Prozessstrom Prozessstabilisatoren, ausgewählt aus Hydrochinonen, Phenothiazinen, N-oxidhaltigen Verbindungen, vorzugsweise 4-hydroxy-2,2,6,6-tetramethylpiperidin-1-oxyl, und/oder deren Kombination, enthält.

5. Verfahren nach mindestens einem der Ansprüche 1 bis 4, wobei der Prozessstrom in Gegenwart von Reglern, radikalbildenden Initiatoren, vorzugsweise wässrigen Persulfatlösungen, besonders bevorzugt Lösungen von Natrium-, Kalium- oder Ammoniumpersulfaten, wie Na₂S₂O₈; und/oder Reduktionsmitteln, bevorzugt NaHSO₃-Lösungen, Azo-Initiatoren oder organischen Peroxid-Initiatoren, bevorzugt tert.-Butylhydroperoxid, oder einer Kombination aus mindestens einer Eisen-Verbindung mit einer H₂O₂-Lösung bei Temperaturen zwischen 20 bis 150°C, vorzugsweise in einem Temperaturbereich von 80 bis 120 °C, der radikalischen Polymerisation unterworfen wird.

6. Verfahren nach mindestens einem der Ansprüche 1 bis 5, wobei der Prozessstrom
| | |
|---|---|
| 8 bis 40 Gew.-% | (Meth)acrylsäure |
| 0,01 bis 20 Gew.-% | Formaldehyd und |
| jeweils 0,1 bis 10 Gew.-% | Essigsäure und/oder Ameisensäure |
enthält.

7. Verfahren nach mindestens einem der Ansprüche 1 bis 6, wobei der Prozessstrom vorzugsweise folgende Zusammensetzung hat:
| | | |
|---|---|---|
| (Meth)acrylsäure | 8 bis 35 | Gew.-% |
| Formaldehyd | 0,01 bis 5,0 | Gew.-% |
| Essigsäure | 0 bis 5,0 | Gew.-% |
| Maleinsäureanhydrid | 0 bis 3,0 | Gew.-% |
| Ameisensäure | 0 bis 5,0 | Gew.-% |
| Benzoesäure | 0 bis 2,0 | Gew.-% |
| (Meth)acrolein | 0 bis 2,0 | Gew.-% |
| Allylalkohol | 0 bis 0,5 | Gew.-% |
| Hydrochinon | 0 bis 600 | Gew.-ppm |
| Protoanemonin oder dessen Strukturisomere | 0 bis 1000 | Gew.-ppm |
| Wasser | Rest | |

8. Verfahren nach mindestens einem der Ansprüche 1 bis 7, wobei der Prozessstrom Aldehyde, bevorzugt Formaldehyd oder dessen Hydrate, enthält und/oder einer Vorbehandlung, vorzugsweise mit Harnstoff, unterzogen wird.

9. Verfahren nach mindestens einem der Ansprüche 1 bis 8, wobei die erhaltene Poly(meth)acrylsäure in Gegenwart der Nebenkomponenten oder deren Folgeprodukte verestert wird und diese Nebenkomponenten oder deren Folgeprodukte bei der Veresterung zumindest teilweise thermisch abgetrennt werden.

10. Verfahren nach Anspruch 9, wobei die erhaltene Poly(meth)acrylsäure mit (Methoxy)polyethylenglykol und/oder mit Alkoholen verestert wird, die Alkylenetherfunktionalität in ihrer Struktur aufweisen.

11. Verfahren nach Anspruch 9 oder 10, wobei die Veresterung unter Ausschluss eines Katalysators und/oder in einem Temperaturbereich von 120 bis 250 °C, vorzugsweise von 140 bis 180 °C, durchgeführt wird.

12. Verfahren nach mindestens einem der Ansprüche 1 bis 11, wobei die Poly(meth)acrylsäure und/oder die funktionalisierte Poly(meth)acrylsäure zumindest teilweise in Lösung vorliegt und/oder formuliert und/oder isoliert wird, bevorzugt durch Trocknung, Sprühtrocknung oder Fällung.

13. Verwendung der Poly(meth)acrylsäure und/oder der funktionalisierten Poly(meth)acrylsäure, die nach dem Verfahren nach mindestens einem der Ansprüche 1 bis 12 herstelltet ist, als Additiv, Fließverbesserer und Wasserreduktionsmittel, vorzugsweise in der Bauchemie, bei der Verarbeitung von Zement, Mörtel, Beton, sowie als Additiv bei der Verarbeitung von Asphalt oder Teer.

14. Verwendung eines Prozessstroms aus der (Meth)acrolein-Synthese, der zwischen 8 und 50 Gew.-% (Meth)acrylsäure enthält, für radikalische Homo- oder Co-Polymerisation.

15. Poly(meth)acrylsäure und/oder funktionalisierte Poly(meth)acrylsäure, die nach dem Verfahren nach mindestens einem der Ansprüche 1 bis 12 herstelltet ist, und teilweise oder vollständig gelöst in Wasser vorliegt, das teilweise aus der Oxidationsreaktion bei der Herstellung von (Meth)acrolein entstanden ist.
